# EUROPEAN PATENT APPLICATION

(11) **EP 3 392 932 A1**
(43) Date of publication of application: **24.10.2018**
(21) Application number: 17167184.5
(22) Date of filing: 20.04.2017
(51) Int. Cl.: H01M 2/34, H01L 23/525, H02J 7/00

(54) **DISCHARGING DEVICE FOR A BATTERY UNIT**

(71) Applicant: Robert Bosch GmbH, 70442 Stuttgart (DE); Lithium Energy and Power GmbH & Co. KG, 70469 Stuttgart (DE)
(72) Inventor: Deromelaere, Gaetan, 70806 Kornwestheim (DE); Klinsmann, Markus, 70195 Stuttgart (DE); Liebenow, Cornelius, 70372 Stuttgart (DE)

(57) **Abstract**

The invention regards a Discharging device (1) for discharging a battery unit (2), comprising a first contact element (3) and a second contact element (4), each electrically connected to one of two battery unit terminals (18, 19), an electroconductive foil (11), a first isolating element (5) provided for electrically isolating the first contact element (3) from the electroconductive foil (11), a second isolating element (6) provided for electrically isolating the second contact element (4) from the electroconductive foil (11), a first shortcut line (7) including a first switch (9) for selectively shortcutting the first contact element (3) and the electroconductive foil (11), and a second shortcut line (8) including a second switch (10) for selectively shortcutting the second contact element (4) and the electroconductive foils (11).

## Description

### Prior art

The invention regards a discharging device for a battery unit. Further, the invention regards a battery system including a battery unit and such a discharging device. In the present invention, a battery unit is regarded to comprise one battery cell or several battery cells connected in series and/or in parallel.

In this context, US 2015/0079425 A1 discloses a bypass switch which includes a pair of fixed conductors connected in parallel with a battery cell, a movable conductor disposed in a vertical direction with respect to the pair of fixed conductors, and a thermally actuated device. When the battery cell malfunctions, the diode is energized and generates heat that is transferred to the solder through the metal plate, causing the solder to melt, and thereby the thermally actuated device to be displaced. Displacement of the thermally actuated device causes the movable conductor to be displaced in the vertical direction with respect to the fixed conductors and inserted between the fixed conductors, electrically connecting the fixed conductors and forming a bypass circuit to short-circuit the malfunctioned battery cell.

From the prior art, it is also known to provide discharging devices in order to discharge a battery unit. For example, such a discharging device is known from DE 10 2012 005 979 B4. In case of a critical state of the battery unit, the discharging device establishes a low resistance external current path allowing high currents. The battery unit is therefore discharged with a high current and can be transferred to a non-critical state.

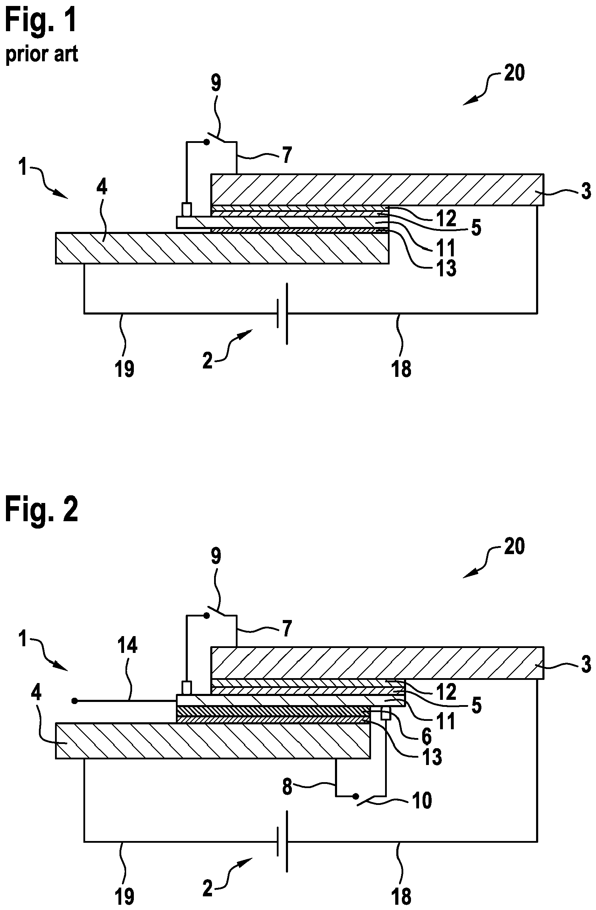

Figure 1 discloses a battery system 20 including a battery unit 2 and a discharging device 1. The discharging device 1 has the same design as in DE 10 2012 005 979 B4 and comprises a first contact element 3 and a second contact element 4, both adapted to carry electrical currents. The first contact element 3 and the second contact element 4 are both electrically connected to one of the battery unit terminals 18, 19. Hence, an electrical voltage can be measured between the first contact element 3 and the second contact element 4.

Further, a reactive electroconductive foil 11 is provided, which is isolated from the first contact element 3 via an isolating element 5. The isolating element 5 is connected to the first contact element 3 via a first solder layer 12. In the same manner, the electroconductive foil 11 is connected to the second conductive element 4 via a second solder layer 13. Due to such a design, no current can flow between the first contact element 3 and the second contact element 4 because of the insulating layer 5.

In case a critical state of the battery unit 2 is detected, for example if the battery unit 2 is damaged, the discharging device 1 is employed to discharge the battery unit 2. The discharging device 1 therefore functions as a switch. For discharging the battery unit 2, the discharging device 1 comprises a shortcut line 7 including a switch 9, which is adapted to selectively shortcut the isolating element 5. As soon as the battery unit 2 has to be discharged, the switch 9 is closed and thereby shortcuts the isolating element 5. Due to an electrical current flowing from the first contact element 3 via the shortcut line 7 to the electroconductive foil 11 and from the electroconductive foil 11 via the second shortcut line 8 to the second contact element 4, the electroconductive foil 11 heats up. Hence, the main function of the electroconductive foil 11 is to release energy for the switching process. This causes the first solder layer 12 and the second solder layer 13 to melt. Further, the isolating element 5 is disintegrated due to the heat generated by the electroconductive foil 11. Thermal disintegration of the isolation layer is only one possible realization of an isolation-solder combination that becomes conductive and allows the solder to contact the element below the isolation layer when exposed to heat. Other designs can be thought up. Independent of the specific realization, the result is that the electroconductive foil 11 is soldered to the first contact element 3 and the second contact element 4 thereby establishing a low resistance current path, which is able to carry high currents.

However, in the design described above, there is the risk that the isolating element 11 deteriorates and does not fulfill the isolating function anymore. In this case, the battery unit 2 is discharged without any need thereby limiting the capacity of the battery system 20. There are no measures known which allow to simply and reliably monitor the isolation capability of the isolating element 5.

### Disclosure of the invention

The discharging device according to the invention allows a simple and reliable test to whether the isolating element still fulfills the isolating function. Particularly, two isolating elements are provided, one on each side of the electroconductive foil. Therefore, the electroconductive foil is fully isolated from the first contact element and the second contact element. The functionality of the isolating elements, i.e. the quality of the isolation provided by the isolating elements, can therefore be evaluated based on monitoring the voltage of the electroconductive foil.

The inventive discharging device for discharging a battery unit comprises a first contact element, a second contact element, an electroconductive foil, a first isolating element, a second isolating element, a first shortcut line, and a second shortcut line. The first contact element and the second contact element are each electrically connected to one of the battery unit terminals. The battery unit terminals are adapted to supply an electrical voltage of the battery unit. According to the present invention, a battery unit is understood to comprise one battery cell or several battery cells, which are combined by serial connection and/or parallel connection. The first isolating element is provided for isolating the first contact element from the electroconductive foil, while the second isolating element is provided for isolating the second contact element from the electroconductive foil. The first shortcut line includes a first switch for selectively shortcutting the first contact element and the electroconductive foil and the second shortcut line includes a second switch for selectively shortcut the second contact element and the electroconductive foils. The electroconductive foil preferably is adapted to heat up as soon as a current flows through the electroconductive foil. Such a current can flow through the electroconductive foil as soon as the first shortcut line and the second shortcut line provide a current path between the battery unit terminals and the electroconductive foil. In order to generate heat, it is preferable that the first shortcut line and the second shortcut line are connected to different areas of the electroconductive foil, such that a distance between the connection point of the first shortcut line and the electroconductive foil and the connection point of the second shortcut line and the electroconductive foil is at least 10% of a largest dimension of the electroconductive foil. When heating up the electroconductive foil, the first isolating element and the second isolating element loose their isolating function, particularly by disintegrating the first isolating element and the second isolating element. In this way, a current path is established between the battery unit terminals in order to discharge the battery unit. Additionally, by activating only one of the shortcut lines, i.e. by either closing the first switch or the second switch, the isolating function of the isolating element, which is not shortcut, can be tested.

The dependent claims contain advantageous embodiments of the invention.

A first solder layer is preferably provided between the first isolating element and the first contact element. Additionally or alternatively, a second solder layer is preferably provided between the second isolating element and the second contact element. The first solder layer and the second solder layer preferably melt as soon as the electroconductive foil heats up. The molten solder then establishes a low resistance electrical connection between the electroconductive foil and the first contact element and the second contact element. With the low resistance electrical connection, the electroconductive foil is not heated anymore such that the solder cools down. In order to connect the first contact element and the electroconductive foil as well as the second contact element and the electroconductive foil, the first isolating element and the second isolating element preferably disintegrate.

In a preferred embodiment, a test line is electrically connected to the electroconductive foils. The test line preferably includes an electrical resistance which limits an electrical current flowing through the test line such that the limited current can not heat the electroconductive foil up to a melting point of the first solder layer and/or the second solder layer. In this way, it can be tested whether or not an electrical current flows from the test line to the first contact element or the second contact element. In such a case, the respective first isolating element or second isolating element does not isolate the electroconductive foil from the first contact element or second contact element anymore. Therefore, the quality of the first isolating element and the second isolating element can be determined. At the same time, it is ensured that such a test does not heat up the electroconductive foil such that establishing a low resistance current path between the first contact element and the second contact element by disintegrating the first isolating element and second isolating element and/or melting the first solder layer and second solder layer is avoided. Hence, a reliable test can be performed without activating the fast discharging device. Additionally, the electrical resistance avoids high currents flowing through the test line as soon as both, the first switch and the second switch are closed in order to activate the discharging device.

In a further preferred embodiment, at least one of the first shortcut line and the second shortcut line directly contact the test line and the respective first contact element or the second contact element. Such a design simplifies the manufacturing process of the discharging device since the electroconductive foil does only have to be provided with two contact points, one for connecting the test line and one for connecting the first shortcut line or second shortcut line.

The first shortcut line preferably is arranged to directly contact the first contact element and the electroconductive foil. In the same way, the second shortcut line preferably is arranged to directly contact the second contact element and the electroconductive foil. In this way, the first isolating element and the second isolating element can be shortcut in order to activate the discharging device. Hence, a current can flow through the electroconductive foil thereby heating the same up and causing the first isolating element and the second isolating element to disintegrate.

The discharging device preferably comprises a control logic, which is adapted to determine whether or not there is an electrical connection between the first contact element and the electroconductive foil and/or the second contact element and the electroconductive foil. Since the first isolating element and the second isolating element selectively can be shortcut via the first shortcut line and the second shortcut line, it can be identified whether or not the non-shortcut isolating element fulfills the isolating functionality. This can either be done by monitoring an electrical voltage between the non-shortcut isolating element or by monitoring a current flowing through the non-shortcut isolating element.

The control logic particularly is adapted to measure an electrical voltage between the electroconductive foil and each of the battery unit terminals. Further, the control logic is adapted to actuate the first switch and the second switch. In this way, the control logic is adapted to selectively shortcut the first or second to thereby test the non-shortcut isolating element view of its isolating function.

Further preferred, the control logic is adapted to successively close the first switch and the second switch. However, only one of the first switch and the second switch is closed at the same time. This means that at any time, at least one of the first isolating element and the second isolating element is not shortcut. In this way it is avoided to unintentionally activate the discharging device. Further, the control logic is adapted to compare the voltages between the first contact element and the electroconductive foil and between the second contact element and the electroconductive foil. These voltages are measured while the first switch and the second switch are open, while the first switch is closed and while the second switch is closed. In case the first isolating element is not damaged, the voltage measured between the first contact element and the electroconductive foil while the second switch is closed has to be to the voltage supplied between the two battery unit terminals. The same applies with regard to the voltage measured between the second contact element and the electroconductive foil while the first switch is closed. Additionally, in case both switches are open, each of the voltages measured between the first contact element and the electroconductive foil and measured between the second contact element and the electroconductive foil has to be equal to half of the voltage supplied by the battery unit. Otherwise, the control logic judges that the respective first isolating element or second isolating element is deficient.

In another embodiment, the control logic is adapted to apply an electrical voltage to the electroconductive foil. Said voltage particularly has a potential between the potentials of the first contact element and the second contact element. Further, the control logic is adapted to monitor the applied voltage. In case the applied voltage decreases, the control logic determines that at least one of the first isolating element and second isolating element is deficient. By further monitoring to which of the first contact element and the second contact element a current flows from the electroconductive foil, the control logic determines which of the first isolating element and second isolating element is deficient. In this embodiment, it is further preferable to provide a fuse at least in such an electrical line which is employed for applying the electrical voltage to the electroconductive foil. In this way, it is avoided that high currents can flow during the test of the first isolating element and the second isolating element such that an unintended activation of the discharging device is avoided.

The invention further regards a battery system. The battery system includes a battery unit and the discharging device according to any of the previous claims, wherein the discharging device is coupled to the battery unit and preferably adapted to discharge the battery unit. The battery unit comprises at least one battery cell. In case more battery cells than one are provided, those battery cells are connected in parallel or serial manner.

### Description of the drawings

Further aspects, advantages and embodiments of the invention will be described with reference to the attached drawings. In the drawings
- Figure 1: is a schematic view of a battery system including a battery unit and the discharging device according to the prior art,
- Figure 2: is a schematic view of a battery system including a battery unit and the discharging device according to a first embodiment of the present invention,
- Figure 3: is a schematic view of a battery system including a battery unit and the discharging device according to a second embodiment of the present invention, and
- Figure 4: is a schematic view of a test circuit to monitor isolating function of the isolating elements of the discharging device according to first or second embodiment of the present invention.

### Embodiments of the invention

Figure 1 is a schematic view of a battery system according to the prior art. This figure was explained above.

Figure 2 is a schematic view of a battery system 20 according to a first embodiment of the present invention. The battery system 20 includes a battery unit 2, which is a single battery cell in this embodiment. Further, the battery system 20 includes a discharging device 1. The discharging device 1 is adapted to discharge the battery cell 2, particularly in case the battery cell 2 is in a critical state due to overheat or damage.

The discharging device 1 includes the first contact element 3 and the second contact element 4. Particularly, the first contact element 3 and the second contact element 4 are busbars. The first contact element 3 is electrically connected to a first terminal 18 of the battery unit 2, wherein the second contact element 4 is electrically connected to a second terminal 19 of the battery unit 2. The battery unit terminals 18, 19 are electrically connected to the battery cell of the battery unit 2 and supply electrical voltage provided by the battery cell.

At least on parts of an outer surface of the first contact element 3, a first solder layer is 12 is provided. In the same way, at least on parts of an outer surface of the second contact element 4, a second solder layer 13 is provided. Further, the discharging device 1 comprises an electroconductive foil 11, which is between the first solder layer 12 and the second solder layer 13. A first isolating element 5 is in contact with the first solder layer 12 and the electroconductive foil 11. In the same way, second isolating element 6 is in contact with the second solder layer 13 and the electroconductive foil 11.

Due to such a design, no current can flow between the first contact element 3 and the second contact element 4 due to the first isolating element 5 and the second isolating element 6. Additionally, no current can flow between the electroconductive foil 11 and the first contact element 3 because of the first isolating element 5 and no current can flow between the electroconductive foil 11 and the second contact element 4 because of the second isolating element 6.

The discharging device 1 additionally comprises a first shortcut line 7 including the first switch 9, wherein the first shortcut line 7 shortcuts first isolating element 5. Hence, the first isolating element 5 is shortcut by closing the first switch 9 such that current can flow between the electroconductive foil 11 and the first contact element 3. The discharging device 1 additionally comprises a second shortcut line 8 including a second switch 10, wherein the second shortcut line 8 shortcuts the second isolating element 6. Again, the second isolating element 6 is shortcut by closing the second switch 10 such that current can flow between the electroconductive foil 11 and the second contact element 4.

As soon as the first switch 9 and the second switch 10 are closed, a current will flow from the first contact element 3 via the electroconductive foil 11 to the second contact element 4. Since the connection points, on which the first shortcut line 7 and the second shortcut line 8 contact the electroconductive foil 11, are spaced apart from each other, the current has to flow directly through the electroconductive foil 11. The electroconductive foil 11 is adapted to heat up due to the current thereby disintegrating the first isolating element 5 and the second isolating element 6 and/or melting the first solder layer 12 and the second solder layer 13. Instead of disintegrating the first isolating element 5 and the second isolating element 6, other realizations of an isolation-solder-combination that becomes conductive and allows the solder to contact the element below the isolating element 6 when exposed to heat.

Due to the solder of the first solder layer 12 and the second solder layer 13, a low resistance electrical connection is established between the first contact element 3, the electroconductive foil 11, and the second contact element 4. Because of this low resistance electrical connection, the electroconductive foil 11 does not heat up anymore but rather cools down such that the solder also cools down. In this way, a low resistance current path between the first terminal 18 and the second terminal 19 is created. Creating said current path is further referred to as activating the discharging device 1.

However, it has to be avoided to activate the discharging device 1 unintentionally. Therefore, the quality of the first isolating element 5 and the second isolating element 6 has to be monitored and the isolating function of the isolating elements 5, 6 has to be evaluated. This is preferably reached by inventive design shown in the first embodiment. Hence, a test line 14 is connected to the electroconductive foil 11. Further, the electrical voltage between the test line 14 and the first contact element 3 and the electrical voltage between the test line 14 and the second contact element 4 can be monitored. Particularly, these voltages are monitored with the first switch 9 or the second switch 10 closed. Alternatively, an electrical current flowing over the first isolating element 5 or the second isolating element 6 can be monitored. Both ways allow evaluating the quality of the first isolating element 5 and the second isolating element 6.

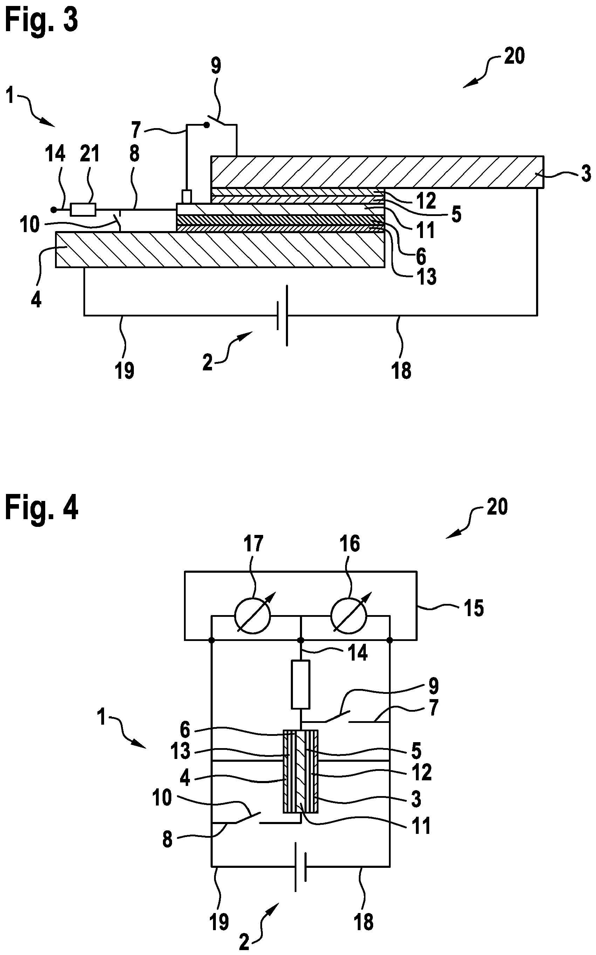

Figure 3 is a schematic view of a battery system 20 according to a second embodiment of the present invention. The second embodiment only differs from the first embodiment in the design of the test line 14 and the second shortcut line 8. Particularly, the second shortcut line 8 and the test line 14 are particularly joined such that only one connection point is provided for connecting both, the test line 14 and the shortcut line 8 to the electroconductive foil 11. Such a design could also be described as the second switch 10 adapted to selectively connect the test line 14 and the second contact element 4.

Further, an electrical resistance 21 is provided inside the test line 14. Particularly, the second switch 10 branches of the test line 14 at a position between the electrical resistance 21 and the electroconductive foil 11. In case first switch 9 and the second switch 10 are closed at the same time and the discharging device 1 is activated, a high current will flow. In order to avoid said current flowing through the test line 14, the electrical resistance 21 is provided. Additionally, the electrical resistance 21 limits the electrical current which can flow through the test line 14 during test of the first isolating element 5 and the second isolating element 6. Therefore, unintentional activation of the discharging device 1 during test of the isolating functions of the first isolating element 5 and second isolating element 6 is avoided.

Figure 4 is an example of how to connect a control logic 15 to the discharging device 1 according to the first or second embodiment. Particularly, the control logic 15 is connected to the test line 14, the first terminal 18 or the first contact element is 3, and the second terminal 19 or the second contact element 4. The control logic 15 includes a first voltage measurement device 16 and a second voltage measurement device 17. The first voltage measurement device 16 is adapted to measure a voltage between the test line 14 and the first contact element 3, while the second voltage measurement device 17 is adapted to measure a voltage between the test line 14 and the second contact element 4. The control logic 15 is further adapted to actuate the first switch 9 and the second switch 10.

During normal operation of the battery system 20, i.e. in case the first switch 9 and the second switch 10 are open, each of the voltage measurement devices 16, 17 measures half of the output voltage of the battery unit 2. As soon as the first switch 9 is closed, the voltage measured with the first voltage measurement device 16 will drop to 0 while the voltage measured with the second voltage measurement device 17 will increase to the output voltage of the battery unit 2. If the voltage measured with the first voltage measurement device 16 does not drop to 0, the first shortcut line 7 is damaged, e.g. not properly connected to the electroconductive foil 11. If the voltage measured with the second voltage measurement device 17 does not increase up to the output voltage of the battery unit 2, the second isolating element 6 has to be damaged.

Additionally, as soon as the second switch 10 is closed, the voltage measured with the second voltage measurement device 17 will drop to 0 while the voltage measured with the first voltage measurement devices 16 will increase to the output voltage of the battery unit 2. If the voltage measured with the second voltage measurements device 17 does not drop to 0, the second shortcut line 8 is damaged, e.g. not properly connected to the electroconductive foil 11. If the voltage measured with the first voltage measurement device 16 does not increase up to the output voltage of the battery unit 2, the first isolating element has to be damaged.

Further, a damage in the first isolating element 5 or the second isolating element 6 is indicated by the sum of the voltages measured with the first voltage measurement device 16 and the second voltage measurement device 17 is different from the output voltage of the battery unit 2.

Hence, the control logic 15 is adapted to identify damaged shortcut lines 7, 8 as well as damaged isolation elements 5, 6. The battery system 20 therefore is adapted to perform a test of discharging device 1 with the control logic 15 repeatedly within predetermined states of the battery units 2, particularly during idle state. In case damage is recognized, the control logic 15 is adapted to output an error message.

An alternative way to test the discharging device 1 is to apply an electrical voltage to the electroconductive foil 11, which has a potential between the first contact element 3 and the second contact element 4, i.e. between the potential of the first terminal 18 and second terminal 19. During this test, the first switch 9 and the second switch 10 are open. The applied voltage is monitored and damage of the first isolating element 5 or second isolating element 6 is recognized in case the applied voltage drops. Further, it is determined whether a current flows from the electroconductive foil 11 to the first contact element 3 second contact element 4. Based on such a current it is determined which of the isolating elements 5, 6 is damaged.

In the described alternative, the electrical resistance 21 shown in figure 3 is preferably provided in order to limit the currents flowing during the test. In this way, unintentional activation of the discharging device 1 is avoided.

## Claims

1. Discharging device (1) for discharging a battery unit (2), comprising
• a first contact element (3) and a second contact element (4), each electrically connected to one of two battery unit terminals (18, 19),
• an electroconductive foil (11),
• a first isolating element (5) provided for electrically isolating the first contact element (3) from the electroconductive foil (11),
• a second isolating element (6) provided for electrically isolating the second contact element (4) from the electroconductive foil (11),
• a first shortcut line (7) including a first switch (9) for selectively shortcutting the first contact element (3) and the electroconductive foil (11), and
• a second shortcut line (8) including a second switch (10) for selectively shortcutting the second contact element (4) and the electroconductive foil (11).

2. Discharging device (1) according to claim 1, **characterized in that** a first solder layer (12) is provided between the first isolating element (5) and the first contact element (3) and/or a second solder layer (13) is provided between the second isolating element (6) and the second contact element (4).

3. Discharging device (1) according to claim 2, **characterized in that** a test line (14) is electrically connected to the electroconductive foil (11), wherein the test line (14) preferably includes an electrical resistance (21) which limits an electrical current flowing through the test line (14) such that the limited current can not heat the electroconductive foil (11) up to a melting point of the first solder layer (12) and/or the second solder layer (13).

4. Discharging device (1) according to claim 3, **characterized in that** at least one of the first shortcut line (7) and the second shortcut line (8) directly contact the test line (14) and the respective first contact element (3) or the second contact element (4).

5. Discharging device (1) according to any one of claims 1 to 3, **characterized in that** the first shortcut line (7) directly contacts the first contact element (3) and the electroconductive foil (11) and/or the second shortcut line (8) directly contacts the second contact element (4) and the electroconductive foil (11).

6. Discharging device (1) according to any one of the previous claims, **characterized by** a control logic (15) which is adapted to determine whether or not there is an electrical connection between the first contact element (3) and the electroconductive foil (11) and/or the second contact element (4) and the electroconductive foil (11).

7. Discharging device (1) according to claim 6, **characterized in that** the control logic (15) is adapted to measure an electrical voltage between the electroconductive foil (11) and each of the battery unit terminals (18, 19), and which is adapted to actuate the first switch (9) and the second switch (10).

8. Discharging device (1) according to claim 7, **characterized in that** the control logic (15) is adapted to
• successively close the first switch (8) and the second switch (9), wherein only one of the first switch (8) and the second switch (9) is closed at the same time, and
• compare the voltages between the first contact element (3) and the electroconductive foil (11) and between the second contact element (4) and the electroconductive foil (11), which are measured
∘ while the first switch (8) and the second switch (9) are open,
∘ while the first switch (8) is closed, and
∘ while the second switch (9) is closed.

9. Discharging device (1) according to claims 6 to 8, **characterized in that** the control logic (15) is adapted to
• apply an electrical voltage to the electroconductive foil (11) which has a potential between the potentials of the first contact element (3) and the second contact element (4), and
• monitor the applied voltage.

10. Battery system (20) comprising a battery unit (2) and the discharging device (1) according to any of the previous claims, wherein the discharging device (1) is coupled to the battery unit (2).
